# EUROPEAN PATENT APPLICATION

(11) **EP 2 447 818 A1**
(43) Date of publication of application: **02.05.2012**
(21) Application number: 10186805.7
(22) Date of filing: 07.10.2010
(51) Int. Cl.: G06F 3/048

(54) **Method and portable electronic device for presenting text**

(71) Applicant: Research in Motion Limited, Waterloo, Ontario N2L 3W8 (CA)
(72) Inventor: Gammon, Scott Peter, Waterloo Ontario N2L 3W8 (CA)
(74) Representative: Patel, Binesh

(57) **Abstract**

A method and portable electronic device for presenting text portable is provided. In accordance with one example embodiment, there is provided a method to enlarge text on a portable electronic device comprising: determining a location of an onscreen position indicator in text displayed on a display screen of the portable electronic device; and displaying a selected portion of the text in an area in relation to the location of the onscreen position indicator in enlarged text.

## Description

### TECHNICAL FIELD

The present disclosure relates to portable electronic devices, and in particular to a method and portable electronic device for presenting text.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth^{™} capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on touch-sensitive displays may be modified depending on the functions and operations being performed. The power consumed by touch-sensitive displays is a relatively large portion of the total power draw for the device. Accordingly, improvements which reduce the power consumption of touch-sensitive displays of portable electronic devices are desirable.

As portable electronic devices become smaller in size, the display screens typically also become smaller in size. When portable electronic devices are used for the display of text documents, including email messages and web pages, the problem arises of trying to display a large amount of text on a small display screen. The text size of display text may be changed in accordance with user preference. However, the selected text size remains a balance between readability of the text and the amount of text displayed on the display screen. Accordingly, improvements in displaying text on portable electronic devices are desirable.

### BRIEF DESCRIPTION OF THE DRAWINGS

Figure 1 is a simplified block diagram of components of a portable electronic device in accordance with one example embodiment of the present disclosure;

Figure 2 is a front view of an example of a portable electronic device 100 in a portrait orientation;

Figure 3 is a flowchart illustrating a method of enlarging text on a portable electronic device in accordance with one example embodiment of the present disclosure;

Figure 4 is a flowchart illustrating a method of scrolling text on a portable electronic device using a pressure-sensitive input in accordance with one example embodiment of the present disclosure; and

Figures 5A and 5B are front views of the portable electronic device of Figure 2 in a portrait orientation and displaying an example user interface screens in accordance with the present disclosure.

### DETAILED DESCRIPTION OF EXAMPLE EMBODIMENTS

The present disclosure provides a method and device for enlarging and/or scrolling text on a portable electronic device. An application operating on portable electronic device or a device user selects a location in text displayed on the display screen of the portable electronic device using an onscreen position indicator. Selected text in an area in relation to the onscreen position indicator is displayed in enlarged text. The enlarged text may be provided in an overlay. The overlay is a superimposed layer which displays the enlarged text over the reference text from which it was selected. The text may be scrolled with the enlarged text changing in response to the scrolling. The rate of scrolling may be controlled by varying the amount of depression/pressure applied to a pressure-sensitive button. As the pressure-sensitive button is held down, the enlarged text will change in response to the scrolling. The pressure-sensitive button allows the user to modulate the rate at which the text is scrolled to correspond to the user's reading speed. As the user applies more pressure to the pressure-sensitive button, the text will be scrolled at a faster rate. When the user applies less pressure to the pressure-sensitive button, the text will be scrolled at a slower rate.

In accordance with one example embodiment of the present disclosure, there is provided a method to enlarge text and optionally scrolling text on a portable electronic device, comprising: determining a location of an onscreen position indicator in text displayed on a display screen of the portable electronic device; and displaying a selected portion of the text in an area in relation to the location of the onscreen position indicator in enlarged text.

In accordance with another example embodiment of the present disclosure, there is provided a method for scrolling text on a portable electronic device, comprising: determining a location of an onscreen position indicator in text displayed on a display screen of the portable electronic device; and scrolling the onscreen position indicator through text in an area in relation to the onscreen position indicator in response to detection of scrolling input, wherein the text is scrolled at a scrolling rate dependent on an amount of pressure applied to a pressure-sensitive button.

In accordance with a further example embodiment of the present disclosure, there is provided a portable electronic device comprising: a processor; a display screen connected to the processor; and an input device connected to the processor; wherein the processor is configured for performing the described methods.

For simplicity and clarity of illustration, reference numerals may be repeated among the figures to indicate corresponding or analogous elements. Numerous details are set forth to provide an understanding of the example embodiments described herein. The example embodiments may be practiced without these details. In other instances, well-known methods, procedures, and components have not been described in detail to avoid obscuring the example embodiments described. The description is not to be considered as limited to the scope of the example embodiments described herein.

The disclosure generally relates to an electronic device, which is a portable electronic device 100 in the example embodiments described herein. Examples of portable electronic devices 100 include mobile, or handheld, wireless electronic devices such as pagers, cellular phones, cellular smart-phones, wireless organizers, personal digital assistants, wirelessly enabled notebook computers, and so forth. The portable electronic device 100 may also be a portable electronic device 100 without wireless electronic capabilities, such as a handheld electronic game device, digital photograph album, digital camera, or other device.

The present description of example embodiments does not limit implementation to any particular computer programming language or system architecture. Example embodiments described in the specification are not limited to any particular operating system (OS), mobile device architecture, server architecture, or computer programming language.

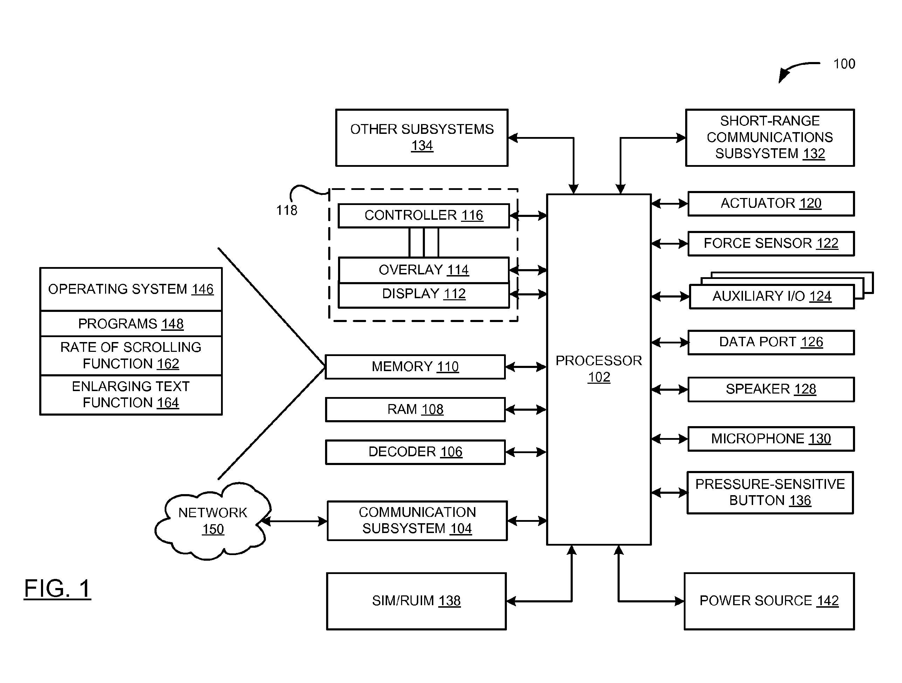

A block diagram of an example of a portable electronic device 100 is shown in Figure 1. The portable electronic device 100 includes multiple components, such as a processor 102 that controls the overall operation of the portable electronic device 100. Communication functions, including data and voice communication, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data electronic. A power source 142, such as one or more rechargeable batteries or a port to an external power supply, powers the portable electronic device 100.

The processor 102 interacts with other components, such as Random Access Memory (RAM) 108, memory 110, a display screen 112 (such as a liquid crystal display (LCD)) with a touch-sensitive overlay 114 operably connected to an electronic controller 116 that together comprise a touch-sensitive display 118, one or more actuators 120, one or more force sensors 122, one or more auxiliary input/output (I/O) subsystems 124, a data port 126, a speaker 128, a microphone 130, short-range electronic subsystem 132, and other device subsystems 134. User-interaction with a graphical user interface (GUI) is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device 100, is displayed on the touch-sensitive display 118 via the processor 102.

To identify a subscriber for network access, the portable electronic device 100 uses a Subscriber Identity Module or a Removable User Identity Module (SIM/RUIM) card 138 for electronic with a network, such as the wireless network 150. Alternatively, user identification information may be programmed into memory 110.

The portable electronic device 100 includes an operating system 146 and software applications or programs 148 that are executed by the processor 102 and are typically stored in a persistent, updatable store such as the memory 110. Additional applications or programs 148 may be loaded onto the portable electronic device 100 through the wireless network 150, the auxiliary I/O subsystem 124, the data port 126, the short-range electronic subsystem 132 or any other suitable subsystem 134.

The device 100 also includes a rate of scrolling function 162 and an enlarging text function 164, which are typically part of the operating system 146, but may be part of a separate routine or program 148 or may be part of a common routine or program 148. The rate of scrolling function 162 scrolls text, for example, in dependence on the amount of pressure applied to a depressible pressure-sensitive button 136 described below. The enlarging text function 164 interacts with the graphical user interface to cause text to be enlarged and may determine an area in relation to the location of the onscreen position indicator and/or the amount by which text will be enlarged.

A received signal such as a text message, an e-mail message, or web page download is processed by the communication subsystem 104 and input to the processor 102. The processor 102 processes the received signal for output to the display screen 112 and/or to the auxiliary I/O subsystem 124. A subscriber may generate data items, for example e-mail messages, which may be transmitted over the wireless network 150 through the communication subsystem 104. For voice electronic, the overall operation of the portable electronic device 100 is similar. The speaker 128 outputs audible information converted from electrical signals, and the microphone 130 converts audible information into electrical signals for processing.

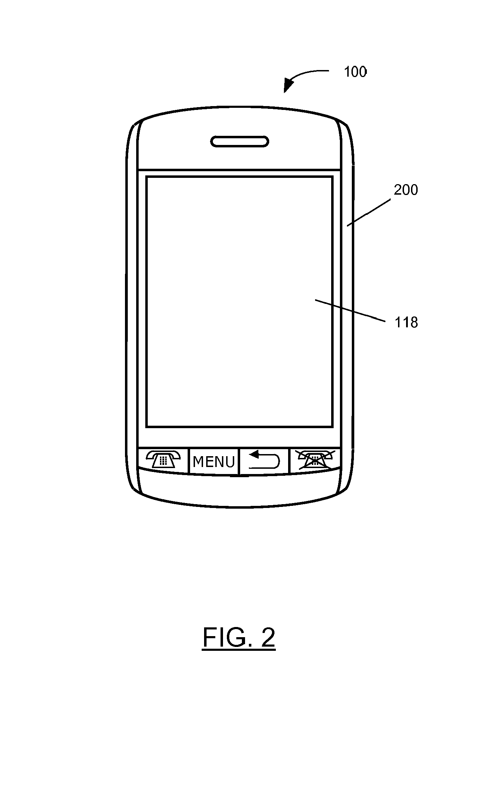

Figure 2 shows a front view of an example of a portable electronic device 100 in portrait orientation. The portable electronic device 100 includes a housing 200 that houses internal components including internal components shown in Figure 1 and frames the touch-sensitive display 118 such that the touch-sensitive display 118 is exposed for user-interaction therewith when the portable electronic device 100 is in use. It will be appreciated that the touch-sensitive display 118 may include any suitable number of user-selectable features rendered thereon, for example, in the form of virtual buttons for user-selection of, for example, applications, options, or keys of a keyboard for user entry of data during operation of the portable electronic device 100.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a centre of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected. The centre of the area of contact of each touch is commonly referred to as the touch point or centroid. It will be appreciated that during a touch event the touch point moves as the object detected by the touch-sensitive display 118 moves.

The actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback.

The auxiliary I/O subsystems 124 could include other input devices such as one or more control keys, a keyboard or keypad, navigation device, or any combination thereof. The navigation device may be a depressible/clickable trackball, a depressible/clickable scroll wheel, a touch-sensitive optical trackpad, or a touch-sensitive touchpad. The auxiliary I/O subsystems 124 may also include a depressible pressure-sensitive button 136. The pressure-sensitive button 136 contains a pressure sensor (not shown) that detects applied pressure and/or level of actuation or depression, and determines the amount of pressure applied and/or depression. The pressure sensor converts this determination into a signal that may be utilized by the rate of scrolling function 162 to determine a rate of scrolling.

In yet other example embodiments, a conventional display screen may be provided instead of the touch-sensitive display 118. In such example embodiments, input may be provided via one or more control keys, a keyboard or keypad, navigation device or any combination thereof.

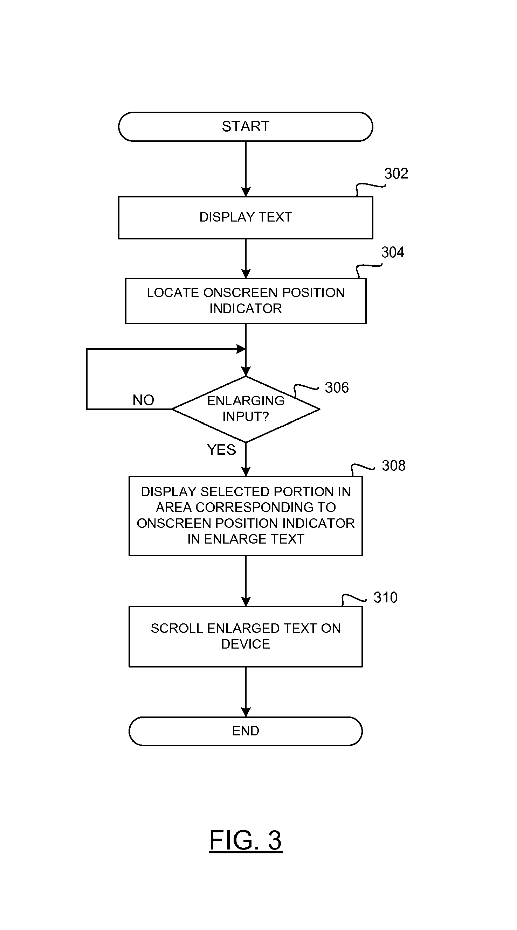

A flowchart illustrating an example embodiment of a method for enlarging text and optionally scrolling on a portable electronic device 100 is shown in FIG. 3. The method may be carried out by software executed, for example, by the processor 102. Coding of software for carrying out such a method is within the scope of a person of ordinary skill in the art given the present disclosure. The method may contain additional or fewer processes than shown and/or described, and may be performed in a different order. Computer-readable code executable by at least one processor 102 of the portable electronic device 100 to perform the method may be stored in a computer-readable medium such as the memory 110. The computer-readable code may be part of the operating system 146, a part of an application, or a stand-alone application.

First, the text to be enlarged is displayed on the display screen 112 of the portable electronic device 100 (block 302), for example, using a viewing or reader application. The text may from any source of text including, but not limited to, a text document stored persistently in memory 110 or downloaded and stored temporality in RAM 108, memory 110, and/or cache memory. For convenience, the source of text will be described in the context of a text document in the remainder of the disclosure. This is not intended to be limiting.

A text document which provides a source of the text may include an electronic message, a word processing document, a Web document such as a markup language document (e.g., HyperText Markup Language (HTML) or extensible Markup Language (XML) document), PDF document or ebook reader document. An electronic message which provides the text document may be, but is not limited to, an email message, Short Messages Service (SMS) text message, Multimedia Message Service (MMS) message, chat message, IM message or peer-to-peer message.

An onscreen position indicator is used to mark a location in the text displayed on the portable electronic device 100. The onscreen indicator may be located at the same time as the text is displayed on the display screen 112 or may be located after the text is displayed on the display screen 112. The onscreen position indicator may be located by an application 148 which displays the text document, or by a device user in response to user input (304). To locate the onscreen position indicator on the display screen 112, a device user may use an input device such as the touch-sensitive display 118, keys, buttons or navigation device.

The onscreen position indicator may be located by the application 148 as part of displaying a new page of the text document or new portion of the text document (e.g., a new paragraph or new line of text), for example, when moving to a new page or new portion of the text document. The application 148 may move to a new page or new portion of the text document in response to scrolling within or between pages or portions of the text document, or in response to a tag or marker in the text document. Scrolling may occur in response to user input or may occur automatically, as described more fully below. A tag or marker in the text document may mark a location where the device user previously stops reading the text document, for example, when the text document or other source of text was last accessed.

The onscreen position indicator may be in the form of a cursor, an arrow, a focus for highlighting text, or other suitable indication. When displaying a new page, the onscreen position indicator may be displayed at a default location in the page. Similarly, when displaying a new portion of text document such as a new paragraph or new line of a page, the onscreen position indicator may be displayed at a default location in the new portion. For example, the onscreen position indicator may be located in or near the first word in the new page or new portion.

The onscreen position indicator need not visually indicate a precise location in the document. The onscreen position indicator may merely represent a portion of the document (e.g., a line or row of text, a paragraph or heading of the document). In such cases, the onscreen position indicator may be visually represented, for example, as an arrow that stays at the left or right margin. A precise location precisely specifying may be hidden to improve usability. For example, the portion of the document (e.g., line or paragraph) in which text to be enlarged or scrolled is located may be shown using the onscreen position indicator; however, a visual indication of the exact word or words being enlarged or scrolled need not be displayed using the onscreen position indicator or otherwise.

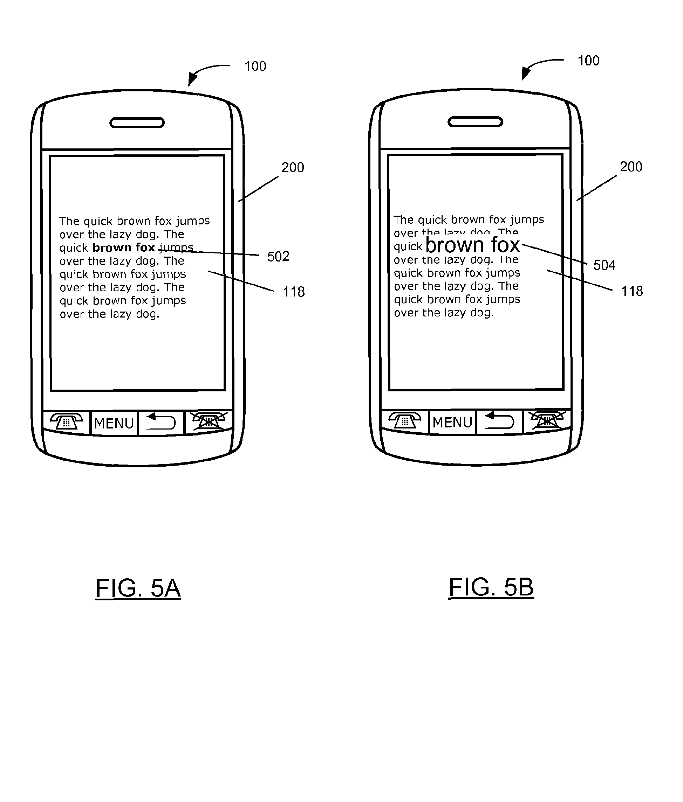

The portable electronic device 100 monitors for enlarging input (block 306). The portable electronic device 100 continues monitoring until enlarging input is detected or enlarging operations are terminated by the application 148 or user, for example, in response to closing the viewing or reader application display application 148 displaying the text. A selected portion of the text in an area in relation to the location of the onscreen position indicator is displayed in enlarged text in response to detection of the enlarging input (308). Figures 5A and 5B illustrate one example embodiment of enlarged text displayed on the portable electronic device 100.

Figure 5A illustrates a front view of the portable electronic device 100 displaying an example text in an initial text size. The initial text size may be a default or normal text size set by device settings or preferences, or may be a particular text size caused directly or indirectly by the active application 148 on the portable electronic device 100 or the use. The text size may be indirectly set by a user by changing a zoom level of a document such as a Web page, word processing document, or book reader document, etc. An onscreen position indicator 502 has been used to select the text "brown fox" in the example text in Figure 5A. The onscreen position indicator 502 takes the form of bolding or highlighting of the selected text in the example embodiment of Figure 5A. In other example embodiments, a different visual representation of the selected text may be provided by the onscreen position indicator 502.

While the initial text size of the reference text in Figure 5A is a legible text size, the text selected by the onscreen position indicator 502 need not be a legible text size until enlarged. For example, the reference text may be a front page of a newspaper in which only large font headlines are legible in un-enlarged text. For processing efficiency, the portable electronic device 100 may not render the smaller text in the reference text (e.g., the text smaller than the large font headlines) in an illegible text size. A paragraph or column in the newspaper underneath the headline may be selected using the onscreen position indicator 502, by the user for example, and previously un-rendered text is displayed in enlarged text in response to enlarging input. The onscreen position indicator 502 may still accurately show (e.g., highlight) the position of the onscreen position indicator 502 in the reference text even though the reference text is not legible when displayed as un-enlarged text in its initial text size.

In Figure 5B, the selected text is enlarged is displayed on the display screen 112 of the portable electronic device 100 in an overlay 504. The overlay 504 is a superimposed layer which displays the enlarged text overtop of the reference text from which it was selected. In the shown example embodiment, the overlay 504 occupies only a small portion of the display screen 112 so that the original text can be seen outside of the area occupied by the overlay 504. The overlay 504 may be located over the selected text and onscreen position indicator 502, or in another location such as a default location. For example, the overlay 504 may be located in the centre of the display screen 112. In other example embodiments, the overlay 504 may be sized to occupy the entire display screen 112.

In some example embodiments, the enlarging input is a depression or actuation of the depressible pressure-sensitive button 136. In some example embodiments, this may provide for variable rate scrolling of the text to be commenced after enlargement of the text, as described below. In other example embodiments, the enlarging input may be depression or actuation of a designated button or key in a keyboard or keypad, designated touch input detected by the touch-sensitive display 118, designated navigation input detected by the navigation device, or a tap or designated motion gesture detected by a motion sensor (not shown) of the portable electronic device 100 such as an accelerometer. Enlarging the text increases the size of the selected text relative to the unselected text.

When the onscreen position indicator is a focus, the area in relation to the location of the onscreen position indicator is the highlighted area. The selected portion of the text is the text highlighted by the onscreen position indicator (e.g., focus). This allows a text string including but not limited to a word, group of words, phrase, sentence or other portion of the text to be selected using the onscreen position indicator and enlarged. When the onscreen position indicator is cursor, the area in relation to the location of the onscreen position indicator may be the word in which the cursor is located or closest to, the sentence in which the cursor is located or closest to, the paragraph in which the cursor is located or closest to, or other portion of the text in which the cursor is located or nearest to. When the onscreen position indicator is an arrow, the area in relation to the location of the onscreen position indicator may be the word over which the arrow is located or closest to, the sentence over which the arrow is located or closest to, the paragraph over which the arrow is located or closest to, or other portion of the text over which the arrow is located or nearest to.

Enlarging of the selected text is performed by the enlarging text function 164. The enlarging text function 164 may determine the area in relation to the location of the onscreen position indicator based on preferences or rules which may be affected by the type of onscreen position indicator, as described above. The enlarging text function 164 may also determine an amount by which the text is enlarged.

To facilitate easier reading, the enlarged text should be presented at a size that is most readable to the user. This may take the form of a configurable range of sizes (e.g., a minimum 12 pt font and a maximum 18 pt font on the display and) and a text enlargement algorithm of the enlarging text function 164 proportionally scales the selected text from its initial display size by a scaling factor to an enlarged display size. This allows variation in the size of the enlarged text in the source material to be maintained and communicated to the user during the reading mode presentation. Other font variations (e.g., colour, additional styling like bold and italics) may also be maintained in the enlarged text with only the size of the text being changed. Alternatively, the enlarging text function 164 may change the font colour and background colour of the overlay 504 to improve contrast and thus readability (e.g., the enlarged text may be displayed black on white or white on black, regardless of the colours displayed in the non-enlarged text).

There are many ways of defining the area in relation to the location of the onscreen position indicator. In one example embodiment, the area may be defined as an area covering a predetermined number (*n*) of characters that occur before or after the location of the onscreen position indicator, or a predetermined number of characters bounded by the location of the onscreen position indicator. For example, the *n* character spaces after the location of the onscreen position indicator may be enlarged where *n* may be 5, 10, 15, 20 or any suitable number of characters. The value of n may be configurable for user preferences in some example embodiments. In another example embodiment, the area in relation to the location of the onscreen position indicator may be defined as the sentence in which the onscreen position indicator is located. In this example embodiment, the text of the entire sentence in which the onscreen position indicator is located will be enlarged. The area in relation to the location of the onscreen position indicator may be defined in other ways.

The amount of text to be enlarged may also be dependent on the size of the display screen 112 of the portable electronic device 100. The size of the display screen 100 may vary between larger sized display screens 112 and smaller sized display screens 112. In some example embodiments, when the display screen 112 is deemed to be large, the area in relation to the location of the onscreen position indicator may be defined as the text of the whole paragraph in which the onscreen position indicator is located. In contrast, when the display screen 112 is deemed to be small, the area in relation to the location of the onscreen position indicator may be defined as the text of the sentence in which the onscreen position indicator is located.

As previously mentioned, the enlarging text function 164 determines the amount by which the text will be enlarged. The enlarging text function 164 may take into account the size of the display screen 112 and the size of the area in relation to the location of the onscreen position indicator when determining the amount by which the text will be enlarged. For example, if an entire paragraph is selected for enlargement by the onscreen position indicator, the enlarging text function 164 may enlarge the paragraph by an amount that would ensure the entire paragraph still fits on the display screen 112.

In other example embodiments, the amount by which the text is enlarged by may be predetermined. The enlargement may be set as a percentage of the size of the original text, for example, the enlargement may be set to 150% of the original size of the text. In yet other example embodiments, the text may be enlarged to a predetermined font size. In yet further example embodiments, the amount of enlargement may be configurable by the device user to tailor the enlargement to individual preferences and needs. An option may be provided for the user to configure the amount of text enlargement in an invokable options menu.

The device user may cause the enlarged text in the overlay 504 to disappear using corresponding input via an input device. In another example embodiment, the enlarged text in the overlay 504 will disappear after it has been displayed for a predetermined duration.

After the selected portion of the text is displayed in enlarged text, the text may be scrolled by the application 148 or in response to user input (310).
Scrolling is optional and need not be performed in all example embodiments.
Scrolling, in some example embodiments, comprises scrolling the onscreen position indicator 502 through the text displayed on the display screen 112 with the selected portion of the text displayed in enlarged text changing in response to the location of the onscreen position indicator. When the onscreen position indicator 502 reaches the end of the displayed text, additional content (if any) of the text document from which the displayed text originates may be displayed on the display screen 112 so that scrolling may continue through the text document beyond portion of the text document which was displayed when the scrolling started.

The scrolling may take the form of either discontinuous movement or continuous movement through the text displayed on the display screen 112, depending on the example embodiment. Scrolling in the form of continuous movement is sometimes referred to as smooth scrolling. Smooth scrolling reduces the appearance of "jumps" in the onscreen position indicator 502 and/or overlay 504 during scrolling. In some example embodiments, smooth scrolling is used to provide the appearance of the onscreen position indicator 502 and/or overlay 504 fluidly sliding through the text displayed on the display screen 112.

The text may be scrolled automatically in response to displaying the enlarged text in which case the enlarging input also provides scrolling input which triggers scrolling of the text. Text enlargement and/or enlarging input thereby operates as an indirect trigger for scrolling of the text. In other example embodiments, the text is scrolled in response to scrolling input distinct from the enlarging input.

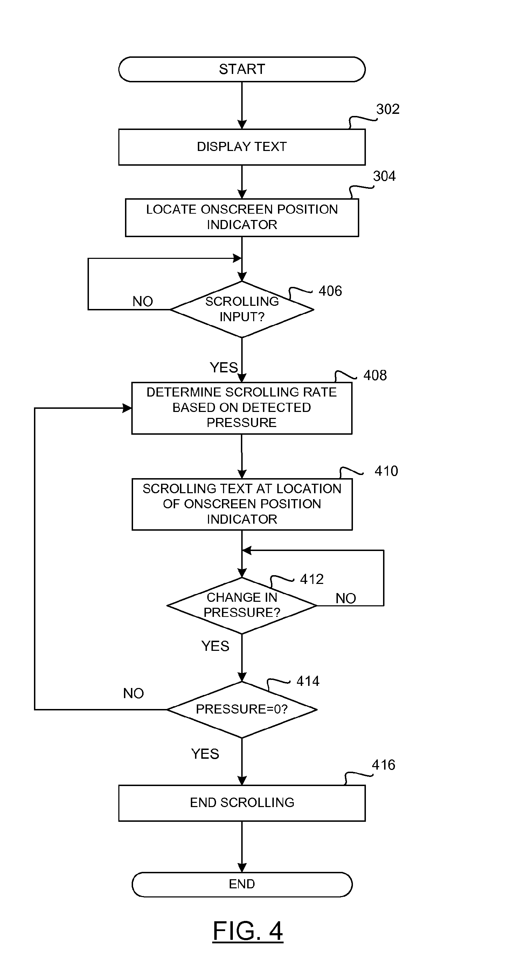

The text may be scrolled in response to activation of a pressure-sensitive button 136, and the text is scrolled at a scrolling rate dependent on an amount of pressure applied to the pressure-sensitive button 136. The activation of a pressure-sensitive button 136 may be enlarging input detected earlier in some example embodiments. As described above, the pressure-sensitive button 136 detects applied pressure and/or level of actuation or depression, and determines the amount of pressure applied and/or depression. The pressure sensor converts this determination into a signal that may be utilized by the rate of scrolling function 162 to determine the scrolling rate. This allows the user to modulate the scrolling rate of the text by varying the amount of pressure exerted on the pressure-sensitive button 136. When the pressure applied to the pressure-sensitive button 136 is increased, the scrolling rate increases. When the pressure that is applied to the button is decreased, the scrolling rate decreases. When the pressure-sensitive button 136 is released, the scrolling stops. The scrolling 310 may comprises performing blocks 406-416 of Figure 4 in some example embodiments, the details of which are described more fully below.

In other example embodiments, the speed or rate of the scrolling may be constant such that the text is scrolled at a predetermined scrolling rate. In such example embodiments, the onscreen position indicator 502 is located in the text displayed on the display screen 112. When enlarged input is received, the text in relation to the location of the onscreen position indicator 502 will be enlarged and then start scrolling according to the predetermined rate. This predetermined rate of scrolling may be configurable using an option in the invokable options menu.

In some example embodiments, continuous scrolling input such as depression of a button causes the text to continue to scroll. Once scrolling input stops, e.g., once the device user releases the button or otherwise stops the scrolling input, the scrolling of the text will also stop. Further scrolling input, such as subsequent depression of the button, will recommence scrolling of the text again. When the scrolling of the text is stopped, the overlay 504 displaying the enlarged text may be removed or disappear to expose the text document with text in original or normal size. In other example embodiments, continuous scrolling input is not required. One-time input such as depression of a button is required to cause the text to be enlarged and to starting to scroll. Scrolling may be paused, stopped or restarted using input from other input devices. In such example embodiments, it is not necessary for a device user to hold down the button or otherwise maintain continuous scrolling input to keep the text scrolling. Scrolling of the text may continue until input to pause or stop scrolling is received. In other example embodiments, a predetermined end point for the scrolling may be defined. For example, the scrolling may continue the first encountered punctuation mark, the end of a sentence in which the onscreen position indicator is located, the end of the paragraph in which the onscreen position indicator is located, or the end of page in which the onscreen position indicator is located.

Scrolling of the text may occur horizontally from left to right in a manner following the text, for example, when reading text with a horizontally oriented display language. In one example embodiment, the onscreen position indicator 502 moves from its original position in original or base text displayed on the display screen 112 while the position of the overlay 504 remains fixed. In other example embodiments, the overlay 504 may track with the text being enlarged. As the onscreen position indicator 502, the selected text changes as determined by the enlarging text function 164. The content of the overlay 504, i.e. the enlarged text, changes in accordance with the changes in the text selected by the onscreen position indicator 502. For example, if enlargement and scrolling of text started at the beginning of a sentence, the onscreen position indicator 502 starts at this position. If the scrolling stops at the end of the sentence, then the onscreen position indicator 502 will be located at the end of the sentence in the original text. The behaviour of the onscreen position indicator 502 to follow the base text content is particularly useful for displaying text where the text is embedded in large media such as, for example, Web pages where the text wraps around images and varying margins making it difficult for a Web browser display the text to reformat at a larger font without scaling the entire page.

In other example embodiments scrolling may occur vertically, for example, for scrolling through large portions of the text or when the display language is a vertically oriented language. Scrolling vertically scrolls the text across the display screen 112 in a top to bottom manner. The onscreen position indicator 502 moves from its original position in original or base text in a line-by-line manner downwards through the text.

A device user may manually scroll through the text using corresponding input via an input device such as the depressible pressure-sensitive button 136. As the user manually scrolls through the text, the text at the area in relation to the onscreen position indicator 502 will appear enlarged in the overlay 504.

Scrolling through the original text may start at one of a number of possible locations in relation to the location of the onscreen position indicator. For example, the enlarged text may begin to scroll at the location of the onscreen position indicator 502, the enlarged text may begin to scroll from the start of a sentence in which the onscreen position indicator 502 is located, the enlarged text begins to scroll from the start of a paragraph that the onscreen position indicator 502 is located, or the enlarged text may begin to scroll from the start of the page that the onscreen position indicator 502 is located. The user may select where scrolling is started using an option in the invokable options menu on the portable electronic device 100.

Scrolling may be limited to a portion of the displayed text which has been highlighted by a focus, allowing a user to select only the highlighted portion of the displayed text to be enlarged and scrolled through. Once end of the highlighted text is reached, scrolling will end. This allows device users to have a particular portion of the text enlarged and scrolled through without requiring further input to stop the scrolling of the text.

A flowchart illustrating an example embodiment of a method for scrolling text on a portable electronic device 100 is shown in FIG. 4. The method may be carried out by software executed, for example, by the processor 102. Coding of software for carrying out such a method is within the scope of a person of ordinary skill in the art given the present disclosure. The method may contain additional or fewer processes than shown and/or described, and may be performed in a different order. Computer-readable code executable by at least one processor 102 of the portable electronic device 100 to perform the method may be stored in a computer-readable medium such as the memory 110. The computer-readable code may be part of the operating system 146, a part of an application, or a stand-alone application.

First, the text to be scrolled is displayed on the display screen 112 of the portable electronic device 100 (block 402), for example, using a viewing or reader application. The text may from any source of text including, but not limited to, a text document stored persistently in memory 110 or downloaded and stored temporality in RAM 108, memory 110, and/or cache memory.

An onscreen position indicator is used to mark a location in the text displayed on the portable electronic device 100. The onscreen indicator may be located at the same time as the text is displayed on the display screen 112 or may be located after the text is displayed on the display screen 112. The onscreen position indicator may be located by an application 148 which displays the text document, or by a device user in response to user input (404). To locate the onscreen position indicator on the display screen 112, a device user may use an input device such as the touch-sensitive display 118, keys, buttons or navigation device.

The portable electronic device 100 monitors for scrolling input (block 406). The portable electronic device 100 continues monitoring until scrolling input is detected or enlarging operations are terminated by the application 148 or user, for example, in response to closing the viewing or reader application display application 148 displaying the text. The scrolling input, in at least some example embodiments, is the depression or actuation of the pressure-sensitive button 136. When scrolling input is received by the portable electronic device 100, the scrolling rate of the text is determined using the rate of scrolling function 162 based on the detected pressure on the pressure-sensitive button 136 (block 408). Alternatively, scrolling may be commenced at a default or predetermined scrolling rate.

Next, the text in an area in relation to the onscreen position indicator starts scrolling 504 on the display screen 112 at the determined scrolling rate (block 410). The text may be scrolled in an overlay 504 similar to that described above.

The portable electronic device 100 monitors for changes in the detected pressure on the pressure-sensitive button 136 (block 412). When no change in pressure is detected, the text continues to scroll at the determined scrolling rate. When a change in pressure is detected, the portable electronic device 100 determines whether the detected pressure is equal to zero (block 414). When the pressure is equal to zero, this indicates that the pressure-sensitive button 136 has been released and scrolling stops (block 416). Where a change in pressure is detected and the pressure is not equal to zero, a new scrolling rate is determined based on the new detected pressure (block 408). The method would then continue through blocks 410-416 of Figure 4.

In some example embodiments, scrolling input from an input device other than the pressure-sensitive button 136 may be used to commence scrolling. The text will scroll at a predetermined scrolling rate in response to receiving the scrolling input. The scrolling rate may be increased in response to depression or actuation of the pressure-sensitive button 136. The scrolling rate will return to the predetermined scrolling rate when the pressure-sensitive button 136 is released. This allows device users to increase the scrolling rate from the predetermined scrolling rate when desired without the need to hold down a button to continue to scroll through the text at the predetermined scrolling rate.

While scrolling has been described primarily in the context of scrolling forwards through text, the described methods apply equally to scrolling backwards through horizontally oriented text. Similarly, the described methods apply equally to downward and upwards scrolling through vertically oriented text. Moreover, the direction of scrolling may be changed in response to predetermined input in combination with scrolling input (if any) of the above described example embodiments. For example, depression or actuation of a predetermined key or button (e.g., an ALT key of a keyboard of the portable electronic device 100) during scrolling may cause a change in the scrolling direction, for example, between forwards and backwards horizontal scrolling or between downwards and upwards vertical scrolling.

While the present disclosure is described, at least in part, in terms of methods, a person of ordinary skill in the art will understand that the present disclosure is also directed to the various components for performing at least some of the aspects and features of the described methods, be it by way of hardware components, software or any combination of the two, or in any other manner. Moreover, the present disclosure is also directed to a pre-recorded storage device or other similar computer readable medium including program instructions stored thereon for performing the methods described herein.

The various embodiments presented above are merely examples and are in no way meant to limit the scope of this disclosure. Variations of the innovations described herein will be apparent to persons of ordinary skill in the art, such variations being within the intended scope of the present disclosure. In particular, features from one or more of the above-described example embodiments may be selected to create alternative example embodiments comprised of a subcombination of features which may not be explicitly described above. In addition, features from one or more of the above-described example embodiments may be selected and combined to create alternative example embodiments comprised of a combination of features which may not be explicitly described above. Features suitable for such combinations and sub-combinations would be readily apparent to persons skilled in the art upon review of the present disclosure as a whole. The subject matter described herein and in the recited claims intends to cover and embrace all suitable changes in technology.

## Claims

1. A method of displaying text on a portable electronic device, comprising:
determining a location of an onscreen position indicator in text displayed on a display screen of the portable electronic device; and
displaying a selected portion of the text in an area in relation to the location of the onscreen position indicator in enlarged text.

2. The method of claim 1, comprising:
monitoring for enlarging input; and
displaying the selected portion of the text in enlarged text in response to the detection of the enlarging input.

3. The method of claim 1 or claim 2, comprising:
scrolling the onscreen position indicator through the text displayed on the display screen, the selected portion of the text displayed in enlarged text changing in response to the location of the onscreen position indicator.

4. The method of claim 3, wherein the text is scrolled automatically in response to displaying the enlarged text.

5. The method of claim 3, wherein the text is scrolled in response to scrolling input distinct from the enlarging input.

6. The method of any one of claims 3 to 5, wherein the text is scrolled at a predetermined scrolling rate.

7. The method of any one of claims 3 to 5, wherein the text is scrolled in response to activation of a pressure-sensitive button, wherein the text is scrolled at a scrolling rate dependent on an amount of pressure applied to the pressure-sensitive button.

8. The method of claim 7, comprising:
increasing the scrolling rate when the amount of pressure applied to the pressure-sensitive button increases; and
decreasing the scrolling rate when the amount of pressure applied to the pressure-sensitive button decreases.

9. The method of any one of claims 1 to 8, wherein the enlarged text is provided in an overlay which overlays the text displayed on the display screen.

10. The method of any one of claims 1 to 9, wherein the selected portion of the text is a word in which in the onscreen position indicator is located.

11. The method of any one of claims 1 to 9, wherein the selected portion of the text is highlighted by the onscreen position indicator.

12. The method of any one of claims 1 to 11, comprising determining an amount by which the text is enlarged.

13. A method automatically scrolling text on a portable electronic device, comprising:
determining a location of an onscreen position indicator in text displayed on a display screen of the portable electronic device; and
scrolling the onscreen position indicator through text in an area in relation to the onscreen position indicator in response to detection of scrolling input, wherein the text is scrolled at a scrolling rate dependent on an amount of pressure applied to a pressure-sensitive button.

14. The method of claim 13, comprising monitoring for scrolling input.

15. An electronic device, comprising:
a processor;
a display connected to the processor; and
an input device connected to the processor;
wherein the processor is configured for performing the method of any one of claims 1 to 14.

## Amended claims

### Amended claims in accordance with Rule 137(2) EPC.

**1.** A method of displaying text on a portable electronic device, comprising:
determining a location of an onscreen position indicator in text displayed on a display screen of the portable electronic device;
displaying a selected portion of the text in an area in relation to the location of the onscreen position indicator in enlarged text; and
scrolling the onscreen position indicator through the text displayed on the display screen, the selected portion of the text displayed in enlarged text changing in response to the location of the onscreen position indicator.

**2.** The method of claim 1, comprising:
monitoring for enlarging input; and
displaying the selected portion of the text in enlarged text in response to the detection of the enlarging input.

**3.** The method of claims 1 or 2, wherein the text is scrolled automatically in response to displaying the enlarged text.

**4.** The method of claims 1 or 2, wherein the text is scrolled in response to scrolling input distinct from the enlarging input.

**5.** The method of any one of claims 1 to 4, wherein the text is scrolled at a predetermined scrolling rate.

**6.** The method of any one of claims 1 to 4, wherein the text is scrolled in response to activation of a pressure-sensitive button, wherein the text is scrolled at a scrolling rate dependent on an amount of pressure applied to the pressure-sensitive button.

**7.** The method of claim 6, comprising:
increasing the scrolling rate when the amount of pressure applied to the pressure-sensitive button increases; and
decreasing the scrolling rate when the amount of pressure applied to the pressure-sensitive button decreases.

**8.** The method of any one of claims 1 to 7, wherein the enlarged text is provided in an overlay which overlays the text displayed on the display screen.

**9.** The method of any one of claims 1 to 8, wherein the selected portion of the text is a word in which in the onscreen position indicator is located.

**10.** The method of any one of claims 1 to 8, wherein the selected portion of the text is highlighted by the onscreen position indicator.

**11.** The method of any one of claims 1 to 10, comprising determining an amount by which the text is enlarged.

**12.** A method automatically scrolling text on a portable electronic device, comprising:
determining a location of an onscreen position indicator in text displayed on a display screen of the portable electronic device; and
scrolling the onscreen position indicator through text in an area in relation to the onscreen position indicator in response to detection of scrolling input, wherein the text is scrolled at a scrolling rate dependent on an amount of pressure applied to a pressure-sensitive button.

**13.** The method of claim 12, comprising monitoring for scrolling input.

**14.** An electronic device, comprising:
a processor;
a display connected to the processor; and
an input device connected to the processor;
wherein the processor is configured for performing the method of any one of claims 1 to 13.
